# EUROPÄISCHE PATENTSCHRIFT

(11) **EP 1 424 190 B1**
(45) Veröffentlichungstag und Bekanntmachung des Hinweises auf die Patenterteilung: **20.02.2008**
(21) Anmeldenummer: 03017739.8
(22) Anmeldetag: 04.08.2003
(51) Int. Cl.: B29C 70/66, B29C 44/02, B29C 45/00

(54) **Spritzguss- oder extrudiertes Formteil und Verfahren zu dessen Herstellung**
Injection moulded or extruded part and method for its manufacture
Objet moulé par injection ou extrusion et procédé pour sa fabrication

(30) Priorität: 09.08.2002 DE 10236509
(43) Veröffentlichungstag der Anmeldung: 02.06.2004
(73) Patentinhaber: Behr GmbH & Co. KG, 70469 Stuttgart (DE)
(72) Erfinder: Wolf, Walter, Dipl.-Ing., 71570 Oppenweiler-Zell (DE)
(74) Vertreter: Grauel, Andreas

(56) Entgegenhaltungen:
- EP-A- 0 348 852
- EP-A- 0 801 094
- GB-A- 2 264 116
- US-A1- 2001 014 394

## Beschreibung

Für einen Spritzguss-Werkstoff wird als Basisstoff üblicherweise ein Kunststoff insbesondere ein Thermoplast, Duroplast oder Elastomer eingesetzt. Zu den wichtigsten Eigenschaften dieser genannten Kunststoff-Werkstoffe zählen die vielfältigen Verarbeitungsmöglichkeiten, wie z. B. Spritzgießen und Extrudieren. Dadurch ist eine mannigfache Formgebung ermöglicht, so dass diese Kunststoffe als zudem kostengünstige Alternative zu metallischen Werkstoffen für den Einsatz in den verschiedensten industriellen Gebieten geeignet sind.

Beim Spritzgießen wird ein Pulver oder Granulat aus Kunststoff in einer Spritzeinheit zu einer Formmasse aufgeschmolzen und in ein beheiztes Spritzgieß-Werkzeug eingespritzt. In diesem Werkzeug ist ein strukturierter Formeinsatz eingebaut, der komplett mit der Formmasse gefüllt wird. Nach dem Abkühlen und Öffnen des Werkzeugs werden die spritzgegossenen Teile entnommen.

Extrudieren bedeutet Strangpressen mit Schneckenpressen, den sog. Extrudern. Die pulver- oder granulatförmige Formmasse wird durch die Schnecke aufgenommen, transportiert und durch Reibung und zusätzliche Heizung plastifiziert. Beim weiteren Transport durch die Schnecke erhöht sich der Druck, und die formbare Masse wird durch eine nachgeschaltete Düse in Form eines Stranges ausgepreßt. Je nach Düsenform werden spezielle Formteile wie beispielsweise Profile, Bänder, Bahnen, Rohre, Schläuche, Fäden, Stäbe, Platten u.ä. erzeugt, so dass die Produktpalette besonders reichhaltig ist.

Durch Zugaben vor und/ oder während eines solchen Formgebungsprozesses können den Werkstoffen spezifisch gewünschte Eigenschaften gegeben werden. So dient üblicherweise ein dem Basiskunststoff zugesetzter Füllstoff wie beispielsweise Glas, Holzmehl, Talkum etc. zur Erhöhung der Festigkeit, der Steifigkeit oder der Wärmestandfestigkeit der daraus gefertigten Formteile.

Diese derzeit üblichen Füllstoffe weisen im allgemeinen eine wesentlich höhere Dichte als der Basiskunststoff auf. Ein solcher Füllstoff bestimmt somit je nach Volumen-Anteil die Dichte des Spritzguss-Werkstoffes und damit im Endeffekt die Dichte der daraus gefertigten Formteile erheblich. Das Gewicht des Formteiles nimmt also zu.

Jedoch sind quasi in allen Bereichen des täglichen Lebens mit zunehmender Tendenz besonders leichte Formteile als Bauträger und Werkstoffe gefragt. Besonders in der in der Automobil-, Luft- und Raumfahrtindustrie, aber auch in den Sparten Medizin, Hausgeräte-Technik, Hochbau und Elektrotechnik kommt der Leichtbauweise eine zentrale Bedeutung zu. Dabei sollen allerdings die anderen Ursprungseigenschaften wie beispielsweise die Wärmestandfestigkeit und die Dimensionsstabilität erhalten bleiben.

Ein Formteil gemäß dem Oberbegriff des Anspruchs 1 wird im EP-A-801094 offenbart.

Der Erfindung liegt daher die Aufgabe zugrunde, Formteilen mit einem besonders geringen Gewicht zu ermöglichen. Des Weiteren soll ein besonders geeignetes Verfahren zur Herstellung derartiger Formteile angegeben werden.

Diese Aufgabe wird erfindungsgemäß gelöst, indem einem als Basisstoff vorgesehenen Kunststoff aufgeschäumte Partikel eines Füllstoffes oder Partikel eines Füllstoffes, die unter üblichen Spritzgieß- oder Extrusionsbedingungen aufschäumen, beigemischt sind.

Die Erfindung geht dabei von der Überlegung aus, dass ein zu einem besonders leichten Formteil zu verarbeitender Spritzguss-Werkstoff derart ausgestattet sein sollte, dass er diesen Erfordernissen und technologischen Anforderungen der Industrie angepasst sein sollte. Ein aus einem Spritzguss-Werkstoff gefertigtes Formteil mit vergleichsweise hohem Gewicht hat nämlich häufig nachteilige Auswirkungen auf die Kosten. So ist beispielsweise eine leichte Bauweise von Kraftfahrzeugteilen zugunsten eines geringen Kraftstoffverbrauchs besonders gewünscht. Diese kann unter anderem dadurch begünstigt werden, dass bereits bei der Herstellung von spritzgegossenen oder extrudierten Formteilen in hohem Maße auf geringe Gewichtsbeiträge geachtet wird.

So sollte das Formteil in allen seinen Bestandteilen oder Komponenten eine vergleichsweise geringe Dichte aufweisen. Dabei sollten bisherige Ursprungseigenschaften beispielsweise hinsichtlich seiner Temperaturbeständigkeit und Dimensionsstabilität sowie seines lsolations- und Dämpfungsverhaltens bezüglich Temperatur, Schall und Schwingungen nach Möglichkeit zumindest beibehalten oder sogar verbessert werden. Dies sollte auch bei der Wahl eines besonders geeigneten Füllstoffes berücksichtigt werden. Dazu sind bei dem Spritzguss-Werkstoff für Formteile dem als Basisstoff vorgesehenen Kunststoff statt eines kompakten Füllstoffes aufgeschäumte Partikel eines Füllstoffes oder Partikel eines Füllstoffes, die unter üblichen Spritzgieß- oder Extrusionsbedingungen aufschäumen, beigemischt.

Bevorzugte Ausgestaltungen des entsprechenden Spritzguss-Werkstoffes für besonders leichte Formteile sind in den Unteransprüchen beschrieben.

Zur Vereinbarung sich eigentlich widersprechender Anforderungen, einer vergleichsweise geringen Dichte unter gleichzeitiger Aufrechterhaltung der Ursprungseigenschaften des als Basisstoff eingesetzten Kunststoffes, beträgt der Volumen-Anteil der aufgeschäumten Partikel des Füllstoffes zwischen 10 % und 60 %, vorzugsweise zwischen 20 % und 40 %. So haben eine hinreichende Verzugsarmut und Torsionssteifigkeit beispielsweise für Formteile, die im Karosseriebau der Automobilindustrie eingesetzt werden, wie zum Beispiel Stoßfänger, eine besondere Bedeutung. Ferner spielt auch für Formteile im Innenbereich eines Kraftfahrzeuges, wie beispielsweise für Gehäuse von Wärmetauschern, Kühlern, Klimaanlagen, Luftzufuhranlagen und/ oder Wasserkästen, eine hinreichende Formsteifigkeit und Wärmestandfestigkeit eine besondere Rolle.

Um eine besonders leichte Durchmischung der Partikel des Füllstoffes mit dem als Basisstoff vorgesehenen Kunststoff zu ermöglichen, sollte die Form der Partikel des Füllstoffes in besonderem Maße eine gleichmäßige Verteilung in der sog. Kunststoffmatrix begünstigen und insbesondere eine Aggregation, Clusterbildung und/ oder Sedimentation verhindern. Daher weisen die Partikel des Füllstoffes anstelle einer Faserform zweckmäßigerweise eine regelmäßige Polyederform oder vorzugsweise eine Kugelform auf. Denn Kugeln haben das kleinste Verhältnis zwischen Oberfläche und Volumen. Die infolge dessen gering gehaltene Wechselwirkung der kugelförmigen Partikel des Füllstoffes miteinander oder mit der Kunststoffmatrix führt dabei dazu, dass der Durchmischungseffekt erleichtert wird. Damit wird beispielsweise ein Verstopfen der Spritzdüse bzw. der Extruderschnecke vermieden. Auch werden im Endeffekt räumlich uneinheitliche Eigenschaften des Formteiles, wie zum Beispiel Festigkeitsunterschiede, unterbunden.

Zur luftdichten Ausgestaltung eines zu fertigenden Formteiles weisen die aufgeschäumten Partikel des Füllstoffes zweckmäßigerweise eine durchschnittliche Partikelgröße auf, die an eine vorgegebene Minimalwandstärke des zu fertigenden Formteiles angepasst ist. Die durchschnittliche Partikelgröße im Formteil beträgt 1/3 oder 1/2 der Wandstärke.

Um ein Befüllen der aufgeschäumten Partikel mit dem verflüssigten oder erweichten Kunststoff zu verhindern, ist die Größe der aufgeschäumten Partikel zweckmäßigerweise so gewählt, dass ihre Innendurchmesser dafür zu klein sind. Dazu sind die Maße der aufgeschäumten Partikel des Füllstoffes in Faserform vorteilhafterweise mit einer Länge zwischen 3 und 15 mm sowie einem Durchmesser zwischen 5 und 15 µm gewählt, während die durchschnittliche Partikelgröße der aufgeschäumten Partikel des Füllstoffes in Kugelform vorteilhafterweise kleiner als 1 mm, vorzugsweise zwischen 0,2 mm und 0,9 mm gewählt ist. Dabei ist die Extruderschnecke oder die Plastifiziereinheit der Spritzgießmaschine jeweils an die Partikelgröße angepasst.

Damit die Hohlräume und Blasen in den aufgeschäumten Partikeln des Füllstoffes auch bei größeren Partikeln nicht durch den verflüssigten oder erweichten Kunststoff ausgefüllt werden und das darin enthaltene Gas oder die Luft nicht verdrängt werden, weisen die Füllstoff-Partikel zweckmäßigerweise gegenüber dem Kunststoff eine geschlossenporige Struktur auf. Durch diese Struktur ist die Oberfläche der Partikel des Füllstoffes impermeabel oder undurchlässig für den Kunststoff.

Für den Spritzguss-Werkstoff ist als Kunststoff vorzugsweise ein Thermoplast, ein Duroplast oder ein Elastomer eingesetzt. Als Thermoplast kommt insbesondere Acrylnitril-Butadien-Styrol-Copolymerisat, Acrylnitril-Styrol-Acrylester-Copolymer, Celluloseacetat, Celluloseacetobutyrat, Ethylen-Vinylacetat, Tetrafluorethylen-Hexafluorethylen-Copolymer, Polyarylamid, Polyamidimid, Polyacrylnitril, Polyarylat, Polyamid, Polybutylentherephtalat, Polycarbonat, Polyethylen, Polyetherimid, Polyetheretherketon, Polyetherketon-etherketon, Polyethersulfon, Polyethylentherephtalat, Perfluoralkoxy Copolymer, Polyaminobismeleinimid, Polymethylmethacrylat, Polyoxymethylen, Polypropylen, Polyphenylenether, Polyphenylenoxid, Polyphenylensulfid, Polystyrol, Polysulfon, Polytetrafluorethylen, Polychlortrifluorethylen, Polyvinylchlorid, Polyvinylidenchlorid, Polyvinylidenfluorid, Styrol-Acrylnitril Copolymer oder Styrol-Butadien Copolymer zum Einsatz. Als Duroplast wird insbesondere Epoxidharz, Melaminformaldehydharz, Melaminphenolharz, Phenol-Formaldehydharz, Polyurethanharz, Silikonharz, Ungesättigte Polyester, Harnstoff-Formaldehydharz oder Vinylesterharz eingesetzt. Während als Elastomer insbesondere Acrylatkautschuk, Polyesterurethan-Kautschuk, Butadien-Kautschuk, Chloropren-Kautschuk, Chlorsulfoniertes Polyethylen, Ethylen-Propylen-Dien Terpolymer, Ethylen-Vinylacetat Copolymer, Epoxidurethan Kautschuk, Fluorsilikonkautschuk, Fluorkautschuk, Isopren-Isobutylen Copolymer, lsoprenkautschuk, Methyl-Vinyl-Silikon Kautschuk, Acrylnitril-Butadien Kautschuk, Styrol-Butadien Kautschuk oder Polysulfid Kautschuk Verwendung findet.

Für einen besonders gering gehaltenen Herstellungsaufwand werden zweckmäßigerweise kommerziell erhältliche Produkte als Füllstoffe eingesetzt. Als aufgeschäumte Füllstoff-Partikel sind vorzugsweise Glasschaumgranulat-Partikel, Glaskugeln mit einem Durchmesser kleiner 50 µm oder Aktivkohle-Partikel eingesetzt. Als Rohstoff für aufgeschäumte Füllstoff-Partikel ist vorzugsweise Glasmehl, Gesteinsmehl, wie zum Beispiel Glimmer mit einem Durchmesser von ca. 3,0 µm, Perlith, Kreide, Calciumcarbonat mit einem Durchmesser von ca. 0,7 µm, Ton, Talkum, Alkalisilikat, Ammoniumsilikat und/oder ein anderes Silikat oder ein anderer Mineralstoff eingesetzt.

Bezüglich des Verfahrens zur Herstellung von Formteilen wird die genannte Aufgabe durch die Merkmale des Anspruchs 9 gelöst.,

Zum Aufschäumen der Füllstoff-Partikel vor dem Einbringen in den Kunststoff wird ihnen zweckmäßigerweise entweder ein Treibmittel beigemengt, oder das Treibmittel wird in ihnen gelöst oder in anderer Weise gebunden. Durch eine geeignete Veränderung der chemischen oder physikalischen Außenbedingungen wird das Treibmittel als Treibgas freigesetzt und bläht die Partikel des Füllstoffes auf. Systeme, wie in DE 199 09 077 A1 und DE 100 39 390 A1 und in den darin genannten Druckschriften beschrieben, greifen dieses Prinzip auf und wenden es zur Erzeugung von Silikatschäumen und Kunststoffschäumen an.

Zur Verringerung des anfänglichen Arbeitsvolumens des Spritzguss-Werkstoffes kann das Verfahren alternativ derart gestaltet werden, dass die Füllstoff-Partikel erst beim Spritzgießen oder Extrudieren aufgeschäumt werden. So wird beispielsweise aus einer sog. Alkalisilikat- und/ oder Ammoniumsilikatmatrix beim Extrudieren Wasser freigesetzt, das seine Partikel aufbläht und somit aufschäumt.

Bezüglich des Formteiles wird die oben genannte Aufgabe gelöst, indem in einem als Basisstoff vorgesehenen Kunststoff aufgeschäumte Partikel eines Füllstoffes eingebettet sind.

Die mit der Erfindung erzielten Vorteile bestehen insbesondere darin, dass durch die Zugabe von aufgeschäumten Partikeln eines Füllstoffes oder von Partikeln eines Füllstoffes, die unter üblichen Spritzgieß- oder Extrusionsbedingungen aufschäumen, zu einem als Basisstoff vorgesehenen Kunststoff Formteile mit einem besonders geringen Gewicht bereitgestellt werden können.

Gerade durch einen geeignet gewählten Volumen-Anteil der aufgeschäumten Partikel des Füllstoffes ist eine Beibehaltung der günstigen Eigenschaften des Basisstoffes wie Formsteifigkeit, Verzugsarmut und Wärmestandfestigkeit bei insgesamt nur geringer Dichte möglich. Die Verwendung von Füllstoff-Partikeln der genannten Form, Größe und Struktur ermöglicht in Kombination mit einem thermoplastischen, duroplastischen oder elastomeren Kunststoff besonders effektiv die gewünschte Dichteerniedrigung, die im Gegensatz zu der durch die Beigabe eines kompakten Füllstoffes üblicherweise in Kauf genommenen Dichteerhöhung steht. Sollte aus technologischen Gründen dennoch der Zusatz auch eines kompakten Füllstoffes erforderlich sein, so kann die Verwendung der aufgeschäumten oder aufzuschäumenden Füllstoff-Partikel allerdings die unerwünschte Gewichtszunahme zumindest kompensieren. Damit wird ein insgesamt besonders leichtes Formteil mit einem breiten Anwendungsfeld, insbesondere im Bereich der Automobilindustrie, zur Verfügung gestellt.

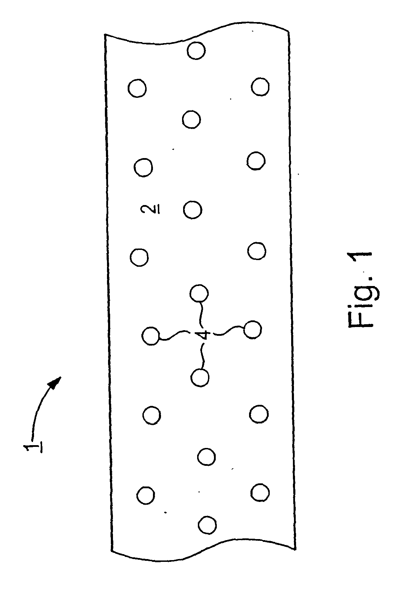

Ein Ausführungsbeispiel der Erfindung wird im Folgenden anhand einer Zeichnung näher erläutert. Darin zeigt die Figur eine ausschnittsweise schematische Darstellung der Komponenten eines spritzgegossenen Formteils.

Das spritzgegossene Formteil 1 weist als Basisstoff 2 einen thermoplastischen Kunststoff auf, der sich aufgrund seiner plastischen Eigenschaften in der Wärme besonders für Verarbeitungstechniken wie das Spritzgießen oder Extrudieren eignet. Diese Verarbeitungstechniken ermöglichen abhängig von der vorgegebenen Düsenform des jeweiligen Werkzeuges die Herstellung entsprechend beschaffener Formteile. Die besonders guten Formgebungseigenschaften erleichtern eine besonders hohe Passgenauigkeit im jeweiligen Verwendungsbereich, beispielsweise beim Verbau in einem Kraftfahrzeug.

Das spritzgegossene Formteil 1 weist zusätzlich zum Basisstoff 2 darin eingebettete Partikel 4 eines Füllstoffes auf. Diese Partikel 4 bestimmen die spezifischen Eigenschaften des spritzgegossenes Formteiles 1 mit. Die Partikel 4 sind daher in besonderem Maße für eine Verwendbarkeit des spritzgegossenes Formteiles 1 auf dem Gebiet der Automobilindustrie ausgelegt. Dafür sind die Partikel 4 derart ausgebildet, dass das daraus gefertigte Formteil 1 den in der Automobilindustrie gestellten Anforderungen bezüglich des Gewichts Rechnung trägt. Diese bestehen nämlich darin, ein außerordentlich leichtes Formteil 1, beispielsweise für das Gehäuse von Klimaanlagen oder Luftzufuhranlagen einsetzen zu können.

Zu diesem Zweck sind die im Basisstoff 2 des spritzgegossenen Formteils 1 eingebetteten Partikel 4 des Füllstoffes, wie oben beschrieben, aufgeschäumt.

Ihr Volumen ist also dadurch vergrößert, dass die aufgeschäumten Partikel 4 mit Luft oder anderen Gasen gefüllte Hohlräume und Blasen aufweisen. Gerade durch die Wahl eines Volumen-Anteils der aufgeschäumten Partikel 4 des Füllstoffes von 40 % im Ausführungsbeispiel ist sowohl eine Beibehaltung der vorteilhaften Eigenschaften bezüglich Formsteifigkeit als auch eine besonders geringe Dichte und damit ein besonders geringes Gewicht des spritzgegossenen Formteiles 1, zum Beispiel eines Gehäuses von Klimaanlagen errreicht. Für den Einsatz beispielsweise für Gehäuse von Wärmetauschern, Kühlern, Luftzufuhranlagen, Wasserkästen und/ oder für ein beliebiges anderes Formteil 1 im Innenbereich oder Außenbereich eines Kratffahrzeuges beträgt der Volumen-Anteil der aufgeschäumten Partikel bedarfsweise zwischen 10 % und 60 %.

Damit die Hohlräume und Blasen in den aufgeschäumten Partikeln 4 des Füllstoffes nicht durch den als Basisstoff 2 vorgesehenen Kunststoff ausgefüllt werden und die darin enthaltene Luft oder das Gas nicht verdrängt werden, werden die Intensität und Dauer der Energiezufuhr, wie in der Druckschrift DE 199 09 077 A1 beschrieben, dementsprechend gewählt, dass die Partikel 4 des Füllstoffes gegenüber dem Kunststoff eine geschlossenporige Struktur aufweisen.

Die im Ausführungsbeispiel gezielte Verwendung von aufgeschäumten Partikeln 4 mit einer Kugelform erleichtert eine Durchmischung der Partikel 4 des Füllstoffes mit dem als Basisstoff 2 vorgesehenen Kunststoff. Dies vermeidet gleichzeitig in besonderer Weise eine unerwünschte Aggregation, Clusterbildung und/ oder Sedimentation der Partikel 4 des Füllstoffes in der sog. Kunststoffmatrix. Denkbar als Partikelform sind allerdings auch eine regelmäßige Polyederform oder eine Faserform.

Anschließend wird der mit den aufgeschäumten Partikeln 4 versehene Kunststoff als Spritzguss-Werkstoff durch die eingangs kurz beschriebene übliche Behandlung beim Spritzgießen in eine gewünschte Form gebracht und somit zu besonders passgenauen Formteilen 1 verarbeitet. Um die Partikel 4 des Füllstoffes bei der Plastifizierung im Spritzgieß-Werkzeug nicht zu zerstören, ist die durchschnittliche Größe der aufgeschäumten Partikel 4 an das Spritzgieß-Werkzeug angepasst und ist daher kleiner als 1 mm. Ferner ist die durchschnittliche Partikelgröße zur luftdichten Ausgestaltung eines zu fertigenden Formteiles 1 an eine vorgegebene Minimalwandstärke des betreffenden Formteiles 1 insoweit angepasst, als das die durchschnittliche Partikelgröße vorzugsweise 1/3 oder 1/2 der Wandstärke beträgt. Im Ausführungsbeispiel beträgt die durchschnittliche Partikelgröße des Füllstoffes 0,9 mm bei einer Minimalwandstärke von 1,8 mm bei einem zum Beispiel ein Klimaanlagengehäuse bildendes Formteil 1. Die Minimalwandstärke anderer Formteile 1 eines Kraftfahrzeuges beträgt üblicherweise zwischen 1 mm und 2 mm, so dass eine besonders günstige durchschnittliche Partikelgröße des Füllstoffes in einer Größenordnung zwischen 0,2 mm und 0,9 mm liegt.

Die Darstellung der Komponenten des besonders leichten spritzgegossenen Formteiles 1 gilt selbstverständlich gleichermaßen für ein extrudiertes Formteil 1 mit einem besonders geringen Gewicht. Der Unterschied besteht nur in der Verarbeitung im Extruder anstelle der im Spritzgieß-Werkzeug. Für das extrudierte Formteil 1 sind daher bezüglich des eingangs kurz beschriebenen Extrudierens geeignete Betriebsparameter gewählt. Ferner ist bei der Darstellung der Zeitpunkt des Aufschäumens der in der Figur gezeigten aufgeschäumten Partikel 4 des Kunststoffes unbeachtlich.

### Bezugszeichenliste

- 1: Formteil
- 2: Basisstoff
- 4: aufgeschäumte Partikel

## Patentansprüche

1. Spritzguss- oder extrudiertes Formteil eines Kraftfahrzeugs, bestehend aus einem Werkstoff (1), bei dem einem als Basisstoff (2) vorgesehenen Kunststoff aufgeschäumte Partikel (4) eines Füllstoffes oder Partikel eines Füllstoffes, die unter üblichen Spritzgieß- oder Extrusionsbedingungen aufschäumen, beigemischt sind, **dadurch gekennzeichnet, dass** das Formteil eine Minimalwandstärke von 1 mm bis 2 mm aufweist und die durchschnittliche Partikelgröße im Formteil zwischen 1/3 und 1/2 der Minimalwandstärke beträgt.

2. Formteil nach Anspruch 1, bei dem der Volumen-Anteil der aufgeschäumten Partikel (4) des Füllstoffes zwischen 10 % und 60 % beträgt.

3. Formteil nach Anspruch 1 oder 2, bei dem die Partikel (4) des Füllstoffes eine Faserform, eine regelmäßige Polyederform oder eine Kugelform aufweisen.

4. Formteil nach einem der vorhergehenden Ansprüche, dessen aufgeschäumte Partikel (4) des Füllstoffes gegenüber dem Kunststoff eine geschlossenporige Struktur aufweisen.

5. Formteil nach einem der vorhergehenden Ansprüche, bei dem als Kunststoff ein Thermoplast, ein Duroplast oder ein Elastomer eingesetzt ist.

6. Formteil nach einem der vorhergehenden Ansprüche, bei dem als aufgeschäumte Partikel (4) des Füllstoffes Glasschaumgranulat-Partikel, Glaskugeln oder Aktivkohle-Partikel eingesetzt sind.

7. Formteil nach einem der vorhergehenden Ansprüche, bei dem als Rohstoff für aufgeschäumte Partikel (4) des Füllstoffes Glasmehl, Gesteinsmehl, Kalk, Ton, Talkum, Alkalisilikat, Ammoniumsilikat und/oder ein anderer Mineralstoff oder ein anderes Silikat eingesetzt ist.

8. Klimaanlage mit einem Gehäuse, **dadurch gekennzeichnet, dass** das Gehäuse aus einem Formteil (1) nach einem der vorhergehenden Ansprüche besteht.

9. Verfahren zur Herstellung von Formteilen (1) nach einem der Ansprüche 1 bis 7, bei dem Partikel eines Füllstoffes in einen Kunststoff eingebracht werden und das daraus entstehende Gemisch als Spritzguss-Werkstoff spritzgegossen oder extrudiert wird, wobei die Partikel des Füllstoffes spätestens beim Spritzgießen oder Extrudieren, vorzugsweise vor dem Einbringen in den Kunststoff, aufgeschäumt werden und die durchschnittliche Partikelgröße im Formteil zwischen 1/3 und 1/2 der Minimalwandstärke beträgt.

## Claims

1. Injection moulded or extruded component of a motor vehicle, consisting of a material (1) in which particles (4) of a filler or filler particles which foam under the usual injection moulding or extrusion conditions are mixed in with a plastic provided as the matrix material (2), **characterised in that** the component has a minimum wall thickness of 1 mm to 2 mm and the mean particle size in the component is between 1/3 and ½ of the minimum wall thickness.

2. Component according to Claim 1, in which the volume fraction of foamed filler particles (4) is between 10% and 60%.

3. Component according to Claims 1 or 2, in which the filler particles (4) have a fibrous, regular polyhedral or spherical shape.

4. Component according to any of the preceding claims, whose foamed filler particles (4) have a closed-pore structure compared with the plastic.

5. Component according to any of the preceding claims, in which a thermoplastic, a thermosetting plastic or an elastomer is used as the plastic.

6. Component according to any of the preceding claims, in which glass foam particles, glass beads or activated carbon particles are used as the foamed filler particles (4).

7. Component according to any of the preceding claims, in which the raw material used for the foamed filler particles (4) is powdered glass, powdered stone, lime, clay, talcum, alkali silicate, ammonium silicate and/or another mineral material or another silicate.

8. Air-conditioning unit with a housing, **characterised in that** the housing is a component according to any of the preceding claims.

9. Method for the manufacture of components (1) according to any of Claims 1 to 7, in which particles of a filler are mixed in with a plastic and the resultant mixture is injection moulded or extruded as an injection-moulding material, such that at the latest during the injection moulding or extrusion process and preferably before mixing in with the plastic, the filler particles are foamed and the mean particle size in the said component is between 1/3 and ½ of the minimum wall thickness.

## Revendications

1. Pièce d'un véhicule automobile moulée par injection ou par extrusion, se composant d'une matière première (1), dans le cadre de laquelle des particules expansées (4) d'une matière de charge ou des particules d'une matière de charge, qui moussent dans des conditions d'injection ou d'extrusion habituelles, sont ajoutées à une matière plastique prévue comme matière de base (2), **caractérisée en ce que** la pièce moulée présente une épaisseur de paroi minimum allant de 1 mm à 2 mm et la taille moyenne des particules dans la pièce moulée se situe entre 1/3 et 1/2 de l'épaisseur de paroi minimum.

2. Pièce moulée selon la revendication 1, dans le cadre de laquelle la part de volume des particules expansées (4) de la matière de charge est comprise entre 10% et 60%.

3. Pièce moulée selon la revendication 1 ou 2, dans le cadre de laquelle les particules (4) de la matière de charge ont une forme de fibre, une forme de polyèdre régulier ou une forme de bille.

4. Pièce moulée selon l'une quelconque des revendications précédentes, dont les particules expansées (4) de la matière de charge présentent une structure à pores fermés par rapport à la matière plastique.

5. Pièce moulée selon l'une quelconque des revendications précédentes, dans le cadre de laquelle un thermoplaste, un duroplaste ou un élastomère est utilisé comme matière plastique.

6. Pièce moulée selon l'une quelconque des revendications précédentes, dans le cadre de laquelle des particules de granulés de verre expansé, des billes de verre ou des particules de charbon actif sont utilisées comme particules expansées (4) de la matière de charge.

7. Pièce moulée selon l'une quelconque des revendications précédentes, dans le cadre de laquelle du verre pulvérisé, de la pierre pulvérisée, de la chaux, de l'argile, du talc, du silicate alcalin, du silicate d'ammonium et/ou une autre matière minérale ou un autre silicate sont utilisés comme matières premières pour particules expansées (4) de la matière de charge.

8. Climatiseur avec un boîtier, **caractérisé en ce que** le boîtier se compose d'une pièce moulée (1) selon l'une quelconque des revendications précédentes.

9. Procédé de fabrication de pièces moulées (1) selon l'une quelconque des revendications 1 7, dans le cadre duquel des particules d'une matière de charge sont introduites dans une matière plastique et le mélange en résultant est moulé par injection ou extrudé sous forme de matière d'injection, les particules de la matière de charge étant moussées au plus tard lors du moulage par injection ou lors de l'extrusion, de préférence avant l'introduction dans la matière plastique, et la taille moyenne des particules dans la pièce moulée se situant entre 1/3 et 1/2 de l'épaisseur de paroi minimum.
